# EUROPEAN PATENT APPLICATION

(11) **EP 4 328 639 A1**
(43) Date of publication of application: **28.02.2024**
(21) Application number: 23190642.1
(22) Date of filing: 09.08.2023
(51) Int. Cl.: G02B 6/38, G02B 6/42

(54) **ELECTRICAL AND OPTICAL CONNECTOR**

(30) Priority: 25.08.2022 US 202217895680
(71) Applicant: Avago Technologies International Sales Pte. Limited, Singapore 768923 (SG)
(72) Inventor: Meadowcroft, David John Kenneth, Framlingham, SF IP 139JY (GB); Raghuraman, Vivek, San Jose (US); Raghunathan, Vivek, Mountain View, 94040 (US); Margalit, Near, Westlake Village, 91361 (US)
(74) Representative: Bosch Jehle Patentanwaltsgesellschaft mbH

(57) **Abstract**

A device (e.g., a laser device, a remote laser module, or the like) may comprise a case (112) configured to secure a laser source (114), an electro-optical connector (108) to connect with an electro-optical (EO) port (110). The EO connector (108) may comprise an optical connector (124) configured to connect with an optical port (126) of the EO port (110), where the optical connector (124) provides light from the laser source (114) to the optical port (126). The EO connector (108) may further comprise an electrical connector (120) configured to connect with an electrical port (122) of the EO port (110). The laser source (114) may receive at least one of power through the electrical connector (120) or facilitate establishing a communication channel through the electrical connector (120). The optical connector (124) and the electrical connector (120) may be located on a first side of the case (112).

## Description

The present disclosure relates generally to a network device suitable for an optical network and, more particularly, to an electro-optical connector for a network device suitable for an optical network.

Network devices such as switches, routers, and the like suitable for optical networks (e.g., networks in which optical signals are transmitted between devices over optical fibers) typically require laser sources for at least some operations. For example, a network device may include or be compatible with optical transceivers that convert an optical signal from an optical fiber to an electrical signal for processing (e.g., analysis operations, routing operations, or the like) and/or convert electrical signals to optical signals for transmission over the optical network.

However, various challenges exist for increasing the data rate of a switch. For example, it may be desirable to physically locate optical components near electrical components to reduce latency, but doing so may undesirably heat the optical components and reduce their efficiency. As another example, laser power provided to such a network device may be limited by eye safety concerns. As another example, the physical space available on a front panel of a rack used to mount networking switches may limit the number of ports within a given form factor and thus limit the achievable data rate for the given form factor. There is therefore a need to develop systems and methods to cure the above deficiencies.

According to an aspect, a device is provided comprising:
a case configured to secure a laser source; and
an electro-optical (EO) connector configured to connect with an EO port, the EO connector comprising:
   an optical connector configured to connect with an optical port of the EO port and is configured to provide light from the laser source to the optical port; and
   an electrical connector configured to connect with an electrical port of the EO port, wherein the laser source is configured to at least one of receive power through the electrical connector or facilitate establishing a communication channel through the electrical connector, wherein the optical connector and the electrical connector are on a first side of the case.

Advantageously, the case encloses the laser source and is formed from one or more materials selected to block the light emitted by the laser source.

Advantageously, the case comprises a heat sink configured to dissipate heat from at least the laser source.

Advantageously, the electrical connector is configured to at least partially engage with the electrical port prior to the optical connector contacting the optical port, wherein the electrical connector provides a coarse alignment for the optical connector.

Advantageously, the optical connector is moveable within a range of distances to connect with the optical port in response to the optical connector being aligned to the optical port within the range of distances.

Advantageously, the laser source is configured to provide the light to the optical port in response to the EO connector being connected to the EO port.

Advantageously, the laser source is configured to receive power through the electrical connector in response to the EO connector being connected to the EO port.

Advantageously, the laser source is configured to provide the light to the optical port in response to a signal being present on the communication channel.

Advantageously, the optical connector provides two or more optical connections.

Advantageously, the electrical connector includes multiple electrical contacts for multiple electrical connections.

Advantageously, the device further comprises:
an optical port on a second side of the case;
one or more optical fibers connected between the optical port on the second side of the case and the optical connector on the first side of the case.

According to an aspect, a system is provided comprising:
a case;
a network device secured to the case, the network device comprising at least one of a switch or a hub; and
one or more electro-optical (EO) ports on the case, wherein each of the one or more EO ports is configured to connect with an EO connector, wherein each of the one or more EO ports comprises:
   an optical port configured to connect with an optical connector of the EO connector, wherein the network device is configured to receive light from a laser source through the optical port; and
   an electrical port configured to connect with an electrical connector of the EO connector, wherein the network device is configured to at least one of provide power through the electrical connector or facilitate establishing a communication channel through the electrical connector, wherein the optical port and the electrical port are on a first side of the case.

Advantageously, the network device further comprises:
one or more optical transceivers located in the case, each of the one or more optical transceivers connected to the optical port of at least one of the one or more EO ports.

Advantageously, the one or more optical transceivers are co-packaged with the network device.

Advantageously, the network device is configured to at least one of:
provide the power through the electrical connector of a particular EO port of the one or more EO ports in response to the particular EO port being connected to the EO connector; or
establish the communication channel through the electrical connector of a particular EO port of the one or more EO ports in response to the particular EO port being connected to the EO connector.

Advantageously, the optical connector of at least one of the one or more EO ports provides multiple optical connections.

Advantageously, at least one of the one or more electrical connectors includes multiple electrical contacts for multiple electrical connections.

Advantageously, the network device is further configured to receive optical signals from one or more devices on a network through the optical port.

According to an aspect, a system is provided comprising:
a network device secured to a first case, the network device comprising at least one of a switch or a hub and
one or more devices connected to one or more electro-optical (EO) ports on the first case, wherein each of the one or devices comprises:
   a laser source secured to a second case; and
   an EO connector configured to connect with a corresponding EO port of the one or more EO ports, the EO connector comprising:
      an optical connector configured to connect with an optical port of the corresponding EO port and configured to provide light from the laser source to the optical port; and
      an electrical connector configured to connect with an electrical port of the corresponding EO port, wherein the laser source is configured to at least one of receive power through the electrical connector or facilitate establishing a communication channel through the electrical connector, wherein the optical connector and the electrical connector are on a first side of the second case.

Advantageously, each of the one or more devices further comprises:
an additional optical port on a second side of the second case; and
one or more optical fibers connected between the optical port on the second side of the second case and the optical connector on the first side of the second case, wherein the network device is further configured to receive optical signals from one or more devices on a network through the additional optical port.

A device is disclosed in accordance with one or more illustrative embodiments of the present disclosure. In one illustrative embodiment, the device comprises a case configured to secure a laser source. In another illustrative embodiment, the device comprises an electro-optical connector configured to connect with an electro-optical port. In another illustrative embodiment, the electro-optical connector comprises an optical connector configured to connect with an optical port of the electro-optical port. In another illustrative embodiment, the optical connector provides light from the laser source to the optical port. In another illustrative embodiment, the electro-optical connector comprises an electrical connector configured to connect with an electrical port of the electro-optical port. In another illustrative embodiment, the laser source is configured to at least one of receive power through the electrical connector or facilitate establishing a communication channel through the electrical connector. In another illustrative embodiment, the optical connector and the electrical connector are on a first side of the case.

A system is disclosed in accordance with one or more illustrative embodiments of the present disclosure. In one illustrative embodiment, the system comprises a case. In another illustrative embodiment, the system comprises a network device secured to the case, where the network device is at least one of a switch or a hub. In another illustrative embodiment, the system comprises one or more electro-optical ports on the case, where each of the one or more electro-optical ports is configured to connect with an electro-optical connector. In another illustrative embodiment, the one or more electro-optical ports comprises an optical port configured to connect with an optical connector of the electro-optical connector, where the network device is configured to receive light from a laser source through the optical port. In another illustrative embodiment, the one or more electro-optical ports comprises an electrical port configured to connect with an electrical connector on the electro-optical connector, where the network device is configured to at least one of provide power through the electrical connector or facilitate establishing a communication channel through the electrical connector. In another illustrative embodiment, the optical port and the electrical port are on a first side of the case.

A system is disclosed in accordance with one or more illustrative embodiments of the present disclosure. In one illustrative embodiment, the system comprises a network device secured to a first case, where the network device comprises at least one of a switch or a hub. In another illustrative embodiment, the system comprises one or more devices connected to one or more electro-optical ports on the first case. In another illustrative embodiment, the one or more devices comprises a laser source secured to a second case. In another illustrative embodiment, the one or more devices comprises an electro-optical connector configured to connect with a corresponding electro-optical port of the one or more electro-optical ports. In another illustrative embodiment, the electro-optical connector comprises an optical connector configured to connect with an optical port of the corresponding electro-optical port, where the optical connector is connected to the laser source to provide light from the laser source to the optical port. In another illustrative embodiment, the electro-optical connector comprises an electrical connector configured to connect with an electrical port of the corresponding electro-optical port, where the laser source is configured to at least one of receive power through the electrical connector or facilitate establishing a communication channel through the electrical connector. In another illustrative embodiment, the optical connector and the electrical connector are on a first side of the second case.

It is to be understood that both the foregoing general description and the following detailed description are exemplary and explanatory only and are not necessarily restrictive of the invention as claimed. The accompanying drawings, which are incorporated in and constitute a part of the specification, illustrate embodiments of the invention and together with the general description, explain the principles of the invention.

### BRIEF DESCRIPTION OF DRAWINGS

The numerous advantages of the disclosure may be better understood by those skilled in the art by reference to the accompanying figures.
FIG. 1A is a box diagram view of the system, in accordance with one or more embodiments of the present disclosure;
FIG. 1B is a diagram of the system, showing laser devices connected to the network device case, in accordance with one or more embodiments of the present disclosure
FIG. 2A is a cross-section view of a laser device, in accordance with one or more embodiments of the present disclosure;
FIG. 2B is a profile view of a laser device, in accordance with one or more embodiments of the present disclosure;
FIG. 2C is a perspective view of a laser device, in accordance with one or more embodiments of the present disclosure;
FIG. 3A is a side profile view of an electro-optical connector on a laser device and an electro-optical port, in accordance with one or more embodiments of the present disclosure;
FIG. 3B is a side profile view of the electro-optical connector and the electro-optical port when connected, in accordance with one or more embodiments of the present disclosure;
FIG. 4 is a perspective view of a laser device illustrating a cage, in accordance with one or more embodiments of the present disclosure;
FIG. 5A is a cross-section view of a laser device including an optical port with an MPO design, in accordance with one or more embodiments of the present disclosure;
FIG. 5B is a side view of a laser device depicting an optical port including an MPO design, in accordance with one or more embodiments of the present disclosure;
FIG. 6A is a cross-section view of a laser device case including an optical port with an SN design, in accordance with one or more embodiments of the present disclosure; and
FIG. 6B is a side view of a laser device including an optical port with an SN design, in accordance with one or more embodiments of the present disclosure.

### DETAILED DESCRIPTION

Reference will now be made in detail to the subject matter disclosed, which is illustrated in the accompanying drawings. The present disclosure has been particularly shown and described with respect to certain embodiments and specific features thereof. The embodiments set forth herein are taken to be illustrative rather than limiting. It should be readily apparent to those of ordinary skill in the art that various changes and modifications in form and detail may be made without departing from the spirit and scope of the disclosure.

As used herein, directional terms such as "top," "bottom," "over," "under," "upper," "upward," "lower," "down," and "downward" are intended to provide relative positions for purposes of description and are not intended to designate an absolute frame of reference. Various modifications to the described embodiments will be apparent to those with skill in the art, and the general principles defined herein may be applied to other embodiments.' Similarly, descriptions that a particular element is "fabricated over" another element (alternatively "located on," "disposed on," or the like) indicates a relative position of such components but does not necessarily indicate that such elements are physically in contact. Such elements may be in physical contact or may alternatively include intervening elements.

As used herein, the terms "connect" and "couple" are used interchangeably to refer to mating between two elements (or components). When an element is referred to herein as being "connected" (or "interconnected") or "coupled" to another element, it is to be understood that the elements can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present. Further, when a first element is referred to herein as being "configured to be connected" to a second element, it is to be understood that these elements need not be located on a common device or circuit. For example, such first and second elements may be separately packaged.

The phrase "at least one of" is used herein to refer to an open-ended listing of elements. For example, the phrase "at least one of A, B, or C" may refer to any combination of elements A, B, and/or C alone or in combination. Further, the phrase "at least one of" does not preclude additional elements. Additionally, the terms "comprising" and "including" are used interchangeably herein to refer to open-ended descriptions of components. For example, a description that a first component comprises (or includes) a second component may indicate that the first component comprises, but is not limited to, the second element. In this way, such a first element may or may not comprise additional elements.

Embodiments of the present disclosure are directed to systems and methods providing space-efficient and scalable electrical and optical (e.g., electro-optical or EO) coupling for a network device (e.g., a switch, a hub, or the like) suitable for a network including at least some optical signals transferred between connected devices. For example, such a network device may include, but is not limited to, a switch (e.g., a device to route signals between devices on a network based on data packets within the signals) or a hub (e.g., a device to connect devices on a physical layer of a network).

It is contemplated herein that a network device suitable for transmitting and/or receiving optical signals may require a laser source for one or more operations. For example, the network device may modulate light from the laser source to include data for transmission to another device on the network.

It may be beneficial to physically separate a laser source from various components of a network device. For example, the light output power (LOP) of many laser sources may decrease as the temperature of the laser source increases. In some cases, network devices may generate substantial heat (e.g., hundreds of Watts for some high data rate systems), physical separation of the laser source may enable higher LOP and extend the operational lifespan of the laser source. As another example, it may be desirable to provide such laser sources as external components that may be coupled with and/or decoupled from the network device. In this way, the laser sources may be replaced or repaired.

Some embodiments of the present disclosure are directed to a laser device including a laser source within a case (e.g., a laser device case), where the laser device case includes an EO connector with both an optical connector and an electrical connector. Such a laser device may be referred to as a removable laser module (RLM) and may be coupled and/or decoupled to a corresponding EO port on a case of a network device (e.g., a network device case), where the network device is suitable for manipulating optical signals from devices on a network (e.g., receiving, generating, routing, and/or modifying the optical signals). In this way, the laser device may provide light to the network device required for one or more operations of the network device. As used herein, a case (e.g., the laser device case, the network device case, or the like) may include any material or combination of materials suitable for at least physically securing components within the case. A case may further include features for performing additional functions such as, but not limited to, thermal management for internal components (e.g., using a heat sink, ventilation holes, or the like), optical shielding (e.g., materials selected to block light of particular wavelengths that fully enclose internal components such as the laser source), or electrical shielding (e.g., materials selected to block electromagnetic radiation that fully enclose internal components).

Some embodiments of the present disclosure are directed to a system including a network device suitable for coupling with one or more laser devices as disclosed herein. For example, such a system may include a network device within a network device case, where the network device case includes one or more EO ports suitable for coupling with corresponding EO connectors on laser devices. Such a system may further include one or more optical fibers internal to the network device case connecting the optical connectors of the one or more EO ports to the network device. In this way, the network device may receive light from the laser device.

It is noted that the terms port and connector are used broadly herein to refer to two components of a coupling assembly. For example, a connector may refer to a male component of a coupling assembly and a port may refer to a female component of the coupling assembly. However, such terms are used for clarity of description and are not intended to be limiting. In this way, the terms port and connector may be used interchangeably herein. A connector may thus refer to a female component of a coupling assembly and a port may refer to a male component of the coupling assembly. Accordingly, any descriptions using the terms port and/or connector should not be interpreted as limiting on the physical layout of an associated component.

Accordingly, as used herein, the terms optical connector and optical port may refer to two components of a coupling assembly providing an optical connection (e.g., a path for the flow of light) between two media suitable for transmitting optical signals or light more generally (e.g., optical fibers, optical waveguides, or the like). For example, an optical connector and an optical port may refer to two components of a coupling assembly suitable for providing an optical connection between two optical fibers. Further, a multi-channel optical connector/optical port may provide optical connections between a first set of optical fibers and a second set of optical fibers.

Similarly, the terms electrical connector and electrical port may refer to two components of a coupling assembly suitable for providing an electrical connection (e.g., a path for the flow of electrical current) between two media suitable for transmitting electrical signals or electrical current more generally such as, but not limited to, wires, electrical traces, or electrical contacts (e.g., electrical conductors). For example, an electrical connector and an electrical port may refer to two components of a coupling assembly suitable for providing an electrical connection between two wires. As another example, an electrical connector and an electrical port may refer to two components of a coupling assembly suitable for providing an electrical connection between two electrical contacts, which may be connected to wires, traces, or the like. As another example, a multi-channel electrical connector/electrical port may provide electrical connections between a first set of electrical contacts and a second set of electrical contacts.

Additionally, the terms EO connector and EO port may refer to two components of a coupling assembly suitable for providing both an optical connection and an electrical connection between two media. For example, an EO connector may include both an optical connector and an electrical connector, while an EO port may include both an optical port and an electrical port. Further, an EO connector and EO port may provide the optical and electrical connections in a common interface such that connection between an EO connector and an EO port may simultaneously establish the optical and electrical connections.

In some embodiments, a laser device further provides an optical pass-through connection between the optical connector of the EO port and an additional optical port. For example, the laser device may further include one or more optical fibers between the optical port and the optical connector. In this way, an optical fiber connected to another device on the network may be coupled to the optical port of the laser device, which may provide an optical connection between the network device and the additional network device.

It is contemplated herein that providing a laser device having a unified EO connector with both an optical connector and an electrical connector may have various benefits over alternative connection techniques. For instance, one alternative connection technique would be to provide an RLM with an electrical port on one side and an optical fiber (or an optical port for coupling with an optical fiber) on another side. Such an RLM would then be coupled to two ports on a case of the network device.

In contrast, a unified EO connector may enable a laser device as disclosed herein to be coupled with a single port on a network device case, which may allow for increased density of port connections and/or greater flexibility for heat management via air holes in the network device case. As a result, a unified EO connector may enable increased data rates for the network device for a given form factor by increasing a number of laser devices connected to it. As an illustration, network device cases are typically designed to mount to a rack (e.g., a network rack) for compatibility with other components. In this configuration, user-accessible ports are typically limited to a panel (e.g., a front panel). Further, it may be desirable that a network device case conform to a standardized size to facilitate compatibility on the rack. For example, a standard rack width is 19 inches. Such a rack may typically accept cases with a 19-inch width (e.g., spanning the full rack width) or a 9.5-inch width (e.g., spanning half of the rack width). Standard case heights include, but are not limited to, 1U (1.75 inch), 2U (3.5 inch), 4U (7 inch), or the like. In a general sense, it is desirable to provide a network device case within a 1 U form factor to maximize a number of network devices on the rack. It is contemplated herein that a unified EO connector may be physically smaller than two separate connectors to facilitate an increased port density on the panel of the network device.

As another example, a unified EO connector may enable all optical fibers to be contained within a case, which may improve eye safety, improve robustness, and reduce clutter. For instance, a unified EO connector may eliminate the need to have an optical fiber connection outside the panel between the laser device and a separate optical port. Rather, light from the laser device may be directly coupled to a port on the network device case without the need for an external fiber that may be vulnerable to breakage and may interfere with additional elements on the panel. Further, this configuration may ensure that the light generated by the laser source is only emitted when the laser device is coupled to the network device case, which may reduce or eliminate a risk of exposure to a user. As a result, an output power of the laser device may be increased (e.g., beyond traditional eye safety limits) as desired without risk of potential exposure to a user when coupling or decoupling the laser device.

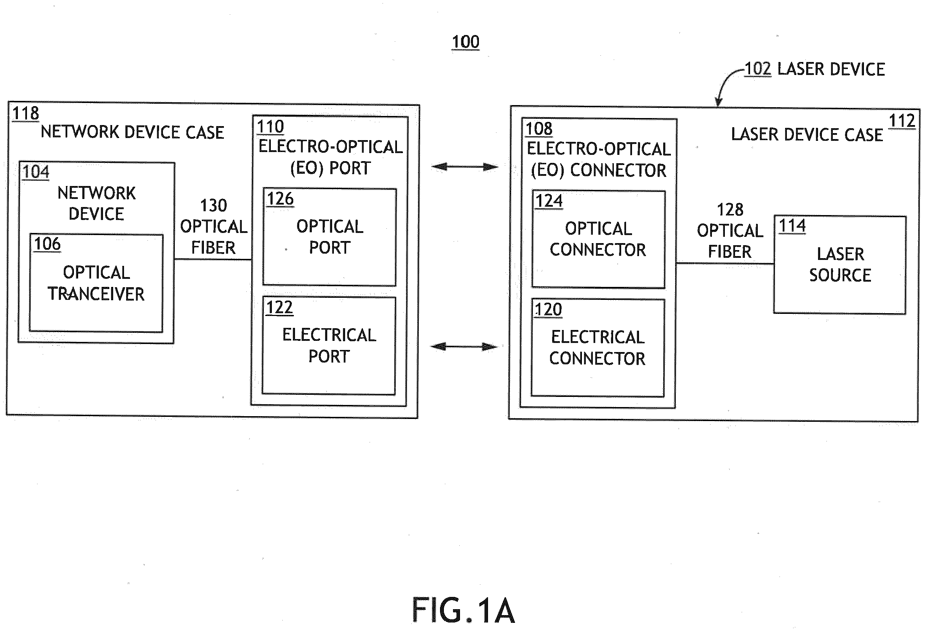

Referring now to FIGS. 1A-6B, systems and methods for EO coupling to a network device are described in greater detail, in accordance with one or more embodiments of the present disclosure.

FIG. 1A is a box diagram view of a system 100 providing EO coupling of a laser device 102 to a network device 104, in accordance with one or more embodiments of the present disclosure. FIB. 1B is a top view of the system 100 of FIG. 1A including multiple laser devices 102 coupled to the network device 104, in accordance with one or more embodiments of the present disclosure.

The network device 104 may include any component or combination of components suitable for routing and/or manipulating data (e.g., data packets, header information, or the like) between devices in a network. Non-limiting examples of the network device 104 include a switch or a hub. One particular non-limiting example of a network device 104 includes a Tomahawk integrated circuit provided by Broadcom Inc. Further, a network may generally include any number of devices connected using any topology. For example, devices on a network may include one or more clients (e.g., computers, servers, or the like) and/or network devices 104 (switches, hubs, or the like) to provide connections between the clients.

A network may generally support any type of signals transferred between the various devices including, but not limited to, electrical signals carried through electrical conductors (e.g., wires, cables, or the like), optical signals carried through optical fibers, or wireless signals (e.g., carried through radio frequency (RF) channels, free-space optical channels, or the like). As an illustration, a network may include various network devices 104 connected by electrical connections (e.g., supporting electrical signals) and/or optical connections (e.g., supporting optical signals) to provide high data transfer rates with high reliability, where clients may connect to the network devices through varied means.

An optical signal may include any type of optical transmission (e.g., transmission of photons) through a suitable medium such as, but not limited to, an optical fiber or an optical waveguide. For example, an optical signal may include continuous-wave (CW) or unmodulated light at one or more wavelengths. As another example, an optical signal may include an optical data signal modulated using any suitable technique such as, but not limited to, wavelength division multiplexing (WDM), coarse WDM (CWDM), or dense WDM (DWDM). In this way, an optical signal may include data (e.g., data packets, header information, or the like) transmitted across the network.

An electrical signal may include any type of electrical transmission (e.g., transmission of electrons) through a suitable medium such as, but not limited to, a conductor. For example, an electrical signal may include an electrical data signal (e.g., a digital data signal, a logic signal, or the like) modulated using any suitable technique. In this way, an electrical signal may include data (e.g., data packets, header information, or the like) transmitted across the network. As another example, an electrical signal may include a power signal (e.g., a signal provided by a voltage or current source).

In some embodiments, the network device 104 is suitable for transmitting and/or receiving optical signals. In some embodiments, the network device 104 includes one or more electronic circuits and at least one optical transceiver 106 as an EO interface. For example, a network device 104 may receive an optical signal from a device on a network, convert this optical signal to an electrical signal (e.g., with an optical transceiver 106) for analysis, routing, and/or manipulation, and convert the resulting electrical signal to an optical signal (e.g., using an optical transceiver 106) for transmission to another device on the network.

The network device 104 may include any type or combination of electronic circuits suitable for analysis, routing, and/or manipulation of electronic signals associated with data for transmission across the network. For example, the network device 104 may include, but is not limited to, one or more processors or a memory. In this way, the one or more processors may execute program instructions stored on the memory. A processor may broadly include any device having one or more processing or logic elements (e.g., one or more micro-processor devices, one or more application specific integrated circuit (ASIC) devices, one or more field programmable gate arrays (FPGAs), or one or more digital signal processors (DSPs)). The memory may include any storage medium known in the art suitable for storing program instructions executable by the associated with the one or more processors. For example, the memory may include a non-transitory memory medium. By way of another example, the memory may include, but is not limited to, a read-only memory (ROM), a random-access memory (RAM), a magnetic or optical memory device (e.g., disk), a magnetic tape, a solid-state drive, or the like.

An optical transceiver 106 may generally include any number or combination of components suitable for converting an optical signal to an electrical signal or vice versa. For example, an optical transceiver 106 may include an optical detector (e.g., a photodiode, or the like) to convert an optical signal to an electrical signal. As another example, an optical transceiver 106 may include a light modulator (e.g., an electro-optic modulator, an acousto-optic modulator, or the like) to modulate light with data. As another example, an optical transceiver 106 may include spectrally-selective and/or dispersive elements such as, but not limited to spectral filters or beam combiners. In this way, an optical transceiver 106 may receive or transmit data modulated with a wavelengthselective scheme such as, but not limited to, WDM, CWDM, or DWDM. Further, an optical transceiver 106 may be provided as a separate component in the network device 104, may be co-packaged with electrical circuit elements of the network device 104 (e.g., fabricated as multiple devices within a common packing, or the like), or may be fully integrated with electrical circuit elements (fabricated as a single device).

In some embodiments, the network device 104 operates on optical signals (e.g., analyzes, routes, and/or manipulates optical signals) without conversion to electrical signals. In such a configuration, the network device 104 may include one or more optical circuits suitable for analysis, routing, and/or manipulation of optical signals such that an optical transceiver 106 may not be necessary. In some embodiments, the network device 104 includes a combination of electronic circuits and optical circuits. For example, one or more electronic circuits may be used to control (e.g., via control signals) one or more components of the one or more optical circuits to provide analysis, routing, and/or manipulation of optical signals without conversion to electrical signals.

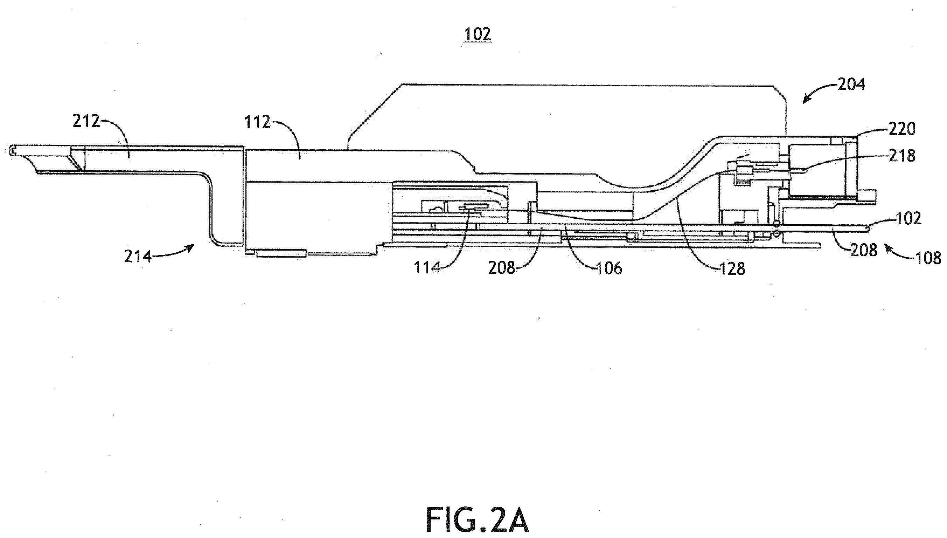

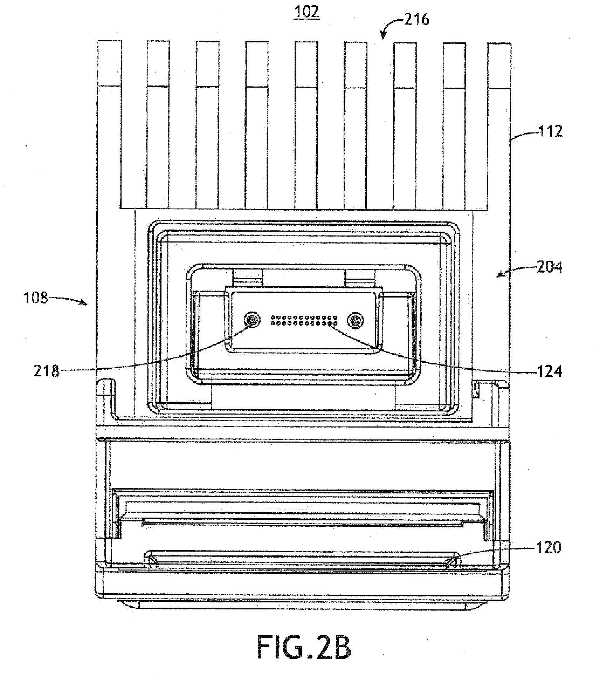

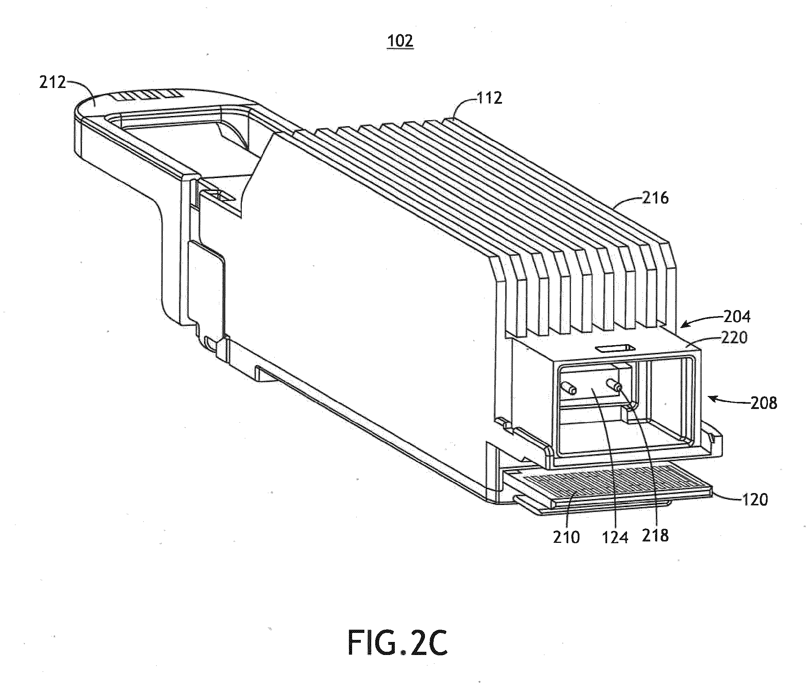

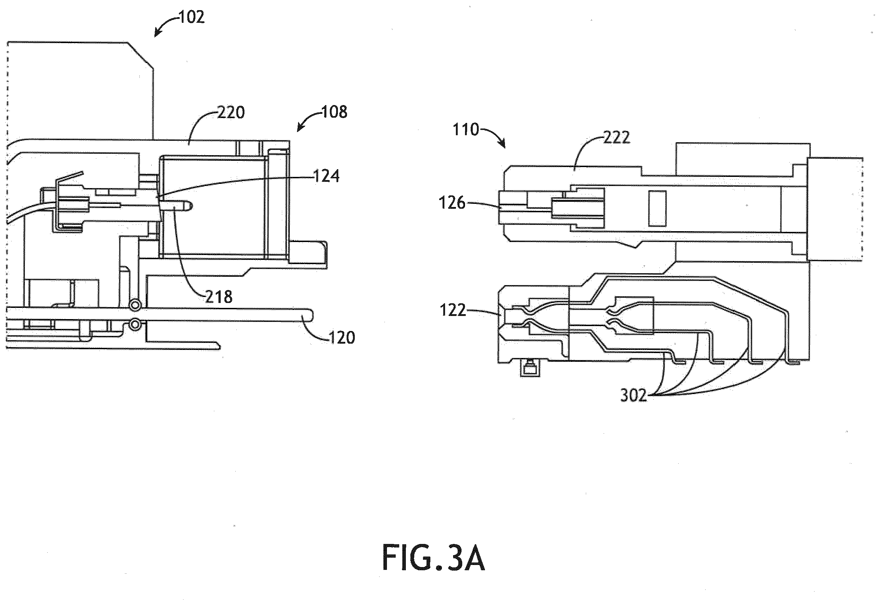

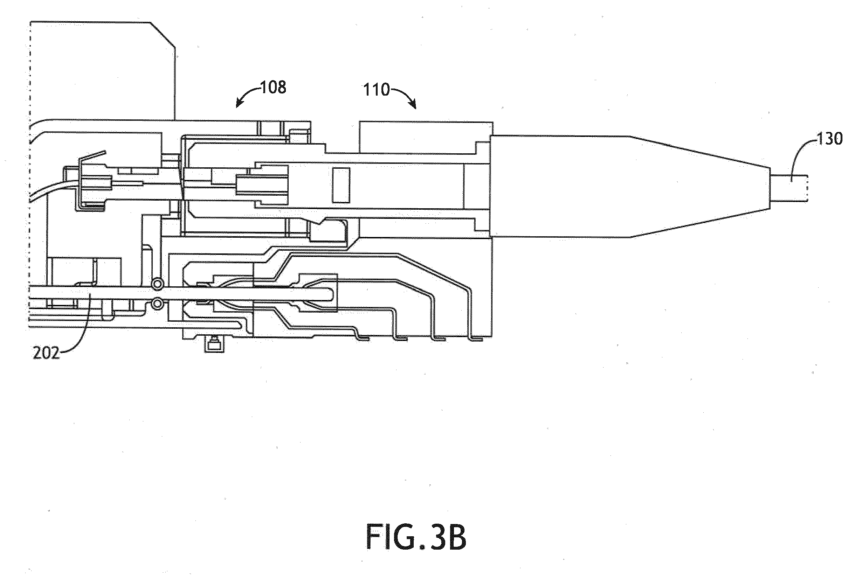

Some embodiments of the present disclosure are directed to a laser device 102. FIGS. 2A-3B depict a first non-limiting embodiment of the laser device 102. In particular, FIG. 2A is a cross-section view of a laser device 102 with an EO connector 108, in accordance with one or more embodiments of the present disclosure. FIG. 2B is a profile view of the laser device 102 in FIG. 2A including the EO connector 108, in accordance with one or more embodiments of the present disclosure. FIG. 2C is a perspective view of the laser device 102 in FIG. 2A including the EO connector 108, in accordance with one or more embodiments of the present disclosure. FIGS. 3A and 3B depict coupling between an EO connector 108 and an EO port 110 using the non-limiting designs illustrated in FIGS. 2A-2C. In particular, FIG. 3A is a side profile view of an EO connector 108 on the laser device 102 as well as an EO port 110 separated from each other prior to coupling, in accordance with one or more embodiments of the present disclosure. FIG. 3B is a side profile view of the EO connector 108 and the EO port 110 when connected, in accordance with one or more embodiments of the present disclosure.

In some embodiments, the laser device 102 includes a laser device case 112 for securing or housing various components. As used herein, descriptions that a case secures a component indicates that the component may be attached to and/or at least partially contained within the case. The laser device case 112 may be formed from any material or combination of materials suitable for securing associated components. Further, the laser device case 112 may enclose (e.g., surround) one or more components or may leave one or more components partially exposed.

In some embodiments, the laser device 102 includes at least one laser source 114 within the laser device case 112. The laser source 114 may include any type of laser emitter known in the art such as, but not limited to, an electro-absorptive laser (EML), a vertical-cavity surface-emitting laser (VCSEL), a Fabry-Perot (FP) laser, a distributed feedback laser (DFB), or the like. Further, the laser source 114 may be provided in any suitable form factor. For example, FIG. 2A depicts a laser source 114 fabricated directly on a printed circuit board (PCB) 202. As another example, though not shown, the laser source 114 may be a dedicated component (e.g., in a TO-Can form factor, in a box, or the like). The laser source 114 may further include one or more additional components to facilitate operation of the laser emitter and/or manipulate light provided by the laser emitter. For example, the laser source 114 may include one or more control circuits regulating power to the laser emitter. As another example, the laser source 114 may include one or more optical components such as, but not limited to, filters (e.g., spectral filters, spatial filters, or the like) or polarizers.

The laser source 114 may provide light having any temporal distribution. For example, the laser source 114 may provide continuous-wave (CW) light, which may be referred to as unmodulated light. As an illustration, the network device 104 may receive CW light from the laser source 114 and modulate this light to provide an optical signal with data suitable for transmission to another device on the network. The laser source 114 may provide light at any wavelength or combination of wavelengths. In this way, the network device 104 may provide an optical signal modulated using a spectrally-selective technique such as, but not limited to, WDM, CWDM, or DWDM. In some embodiments, different laser sources 114 either in a single laser device case 112 or multiple laser device cases 112 may be utilized by the network device 104 for spectrally-selective modulation schemes.

In some embodiments, the laser device 102 includes an EO connector 108 on one side 204 of the laser device case 112 to provide both electrical coupling and optical coupling to a corresponding EO port 110 on a panel 116 of a case (e.g., a side of the case) that secures (e.g., houses) the network device 104 (referred to herein as a network device case 118). In particular, the EO connector 108 may include at least one electrical connector 120 configured to couple with at least one electrical port 122 on the EO port 110 and may further include at least one optical connector 124 configured to couple with at least one optical port 126 on the EO port 110.

As used herein, descriptions of the EO connector 108 on a particular side of the laser device case 112 indicates that at least a portion of the EO connector 108 is accessible from outside the laser device case 112 on the particular side. In some embodiments, at least a portion of the EO connector 108 is formed as a part of the laser device case 112. In some embodiments, the EO connector 108 is formed as one or more separate components that may extend at least partially through an opening of the particular side of the laser device case 112. Further, the laser device 102 may include intervening elements between the laser device case 112 and the EO connector 108 such as, but not limited to a seal, a washer, or the like.

Similarly, descriptions of the EO port 110 on a particular side or panel 116 of the network device case 118 indicates that at least a portion of the EO port 110 is accessible from the outside of the network device case 118 from the panel 116. In some embodiments, at least a portion of the EO port 110 is formed as a part of the network device case 118. In some embodiments, the EO port 110 is formed as one or more separate components that may extend at least partially through an opening of the particular side of the network device case 118. Further, there may be intervening elements between the network device case 118 and the EO port 110 such as, but not limited to a seal, a washer, or the like.

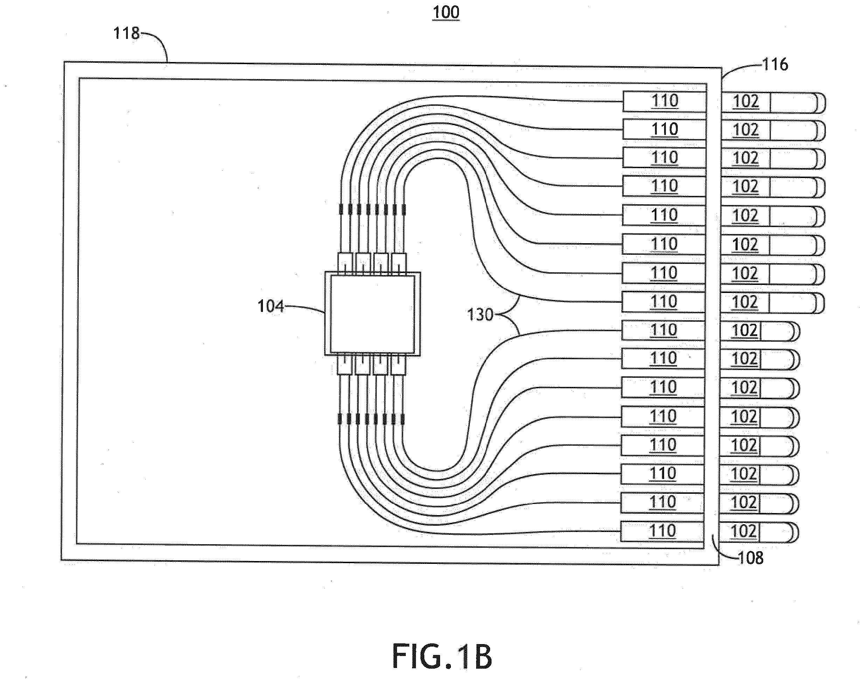

The optical connector 124 and the corresponding optical port 126 may provide at least a portion of an optical connection between the laser source 114 in a laser device 102 and the network device 104. The laser source 114 may be connected to the optical connector 124 within the laser device case 112 using any technique known in the art including, but not limited to, through an optical fiber 128 (e.g., as depicted in at least FIG. 2A) or free-space optical elements (e.g., lenses, or the like). Similarly, the network device 104 may be connected to the optical port 126 within the network device case 118 using any technique known in the art including, but not limited to, through an optical fiber 130 (e.g., as depicted in FIG. 1B) or free-space optical elements (e.g., lenses, or the like). Further, it is particularly noted that the optical connection between the laser source 114 in a laser device 102 and the network device 104 may be completely internal to the laser device case 112 and the network device case 118, which provides eye safety to a user (particularly when optical fibers 128,130 are used) as well as reduces a number of ports and associated components required on the panel 116 of the network device case 118 (e.g., the front panel).

The optical connector 124 and the corresponding optical port 126 may have any suitable design including commercial-off-the-shelf designs or custom designs. For example, optical connector 124 and the corresponding optical port 126 may include or be compatible with a multiple-fiber push-on connector (MPO) design, a Lucent Corporation (LC) design, a Senko (SN) design, or any other suitable designs. Further, the optical connector 124 and the corresponding optical port 126 may support any number of channels and/or optical fiber connections. Accordingly, any of the associated components along the optical connection may support multiple channels. For instance, the optical fibers 128,130 may include optical fiber bundles. As an illustration, FIGS. 2A-3B depict a 12-channel MPO design (e.g., a 1x12 configuration with 12 connections in one row), though this is merely illustrative and any MPO configuration (e.g., 2x12, 3x12, or any other configuration) and any multi-channel configuration of any design is within the spirit and scope of the present disclosure.

Similarly, the electrical connector 120 and the associated electrical port 122 may provide at least a portion of an electrical connection between the laser source 114 in a laser device 102 and the network device 104 (or any associated components in the network device case 118). The electrical connector 120 and the associated electrical port 122 may have any suitable design including commercial-off-the-shelf designs or custom designs. For example, the electrical connector 120 and the associated electrical port 122 may have a quad small form factor pluggable double density (QSFP-DD) design or any other suitable design. As an illustration, FIGS. 2A-3B depict the electrical connector 120 with a QSFP-DD design. In particular, FIGS. 2A-3B illustrate a PCB 202 with an internal portion 206 within the laser device case 112 and an external portion 208 extending out from the laser device case 112. The external portion 208 further includes electrical contacts 210 (e.g., conductive materials transmit or receive an electric current or voltage) to make an electrical connection with the electrical port 122 (e.g., as a male component of the coupler assembly). In FIGS. 3A-3B, the electrical port 122 is illustrating as having flexible contacts 302 that may mechanically secure the external portion 208 of the PCB 202 and/or provide an electrical connection to the electrical contacts 210 thereon.

The laser device 102 and/or the network device 104 (or associated components within the network device case 118) may utilize an electrical connection formed by the electrical connector 120 and the electrical port 122 for any purpose. In some embodiments, the laser device 102 (e.g., the laser source 114 within the laser device 102) receives power through the EO connector 108 (e.g., an electrical voltage and/or a current). For example, the network device case 118 may include power distribution circuitry to provide a selected voltage and/or current for powering the laser device 102). In some embodiments, the laser device 102 establishes a communication channel (e.g., a pathway for the transmission of data) to the network device 104 (or associated components within the network device case 118) through the electrical connector 120. For example, the laser device 102 may provide identifying information and/or configuration information to the network device 104 through the communication channel such that the network device 104 may properly utilize the light from the laser source 114. As another example, the laser device 102 may receive instructions from the network device 104 through the communication channel such as, but not limited to, instructions to the laser source 114 on or off or instructions to adjust a power output of the laser source 114.

The EO connector 108 and its constituent components may be formed as a part of the laser device case 112, may include separate components internal to or connected to the laser device case 112, or a combination thereof. Similarly, the EO port 110 and its constituent components may be formed as a part of the network device case 118, may include separate components internal to or connected to the network device case 118, or a combination thereof.

Referring more generally to the laser device case 112, the laser device case 112 may have any shape or design suitable for securing the laser source 114 and/or the EO connector 108. In some embodiments, the laser device case 112 encloses (e.g., surrounds) the laser source 114 or portions thereof (e.g., a laser emitter).

In some embodiments, as illustrated in FIG. 1B, the laser device case 112 is sized to have a height and width approximately equal to a height and width of the EO port 110. In this way, a high port density may be achieved on the network device case 118 where adjacent laser devices 102 do not interfere with each other. In some embodiments, the laser device case 112 includes features to facilitate handling by a user. For example, FIGS. 2A-3B depict a grip feature 212 on a side 214 opposite the EO connector 108.

In some embodiments, the laser device case 112 includes features to facilitate thermal management of the laser source 114 or any other internal components. For example, FIGS. 2A-3B depict a laser device case 112 including a heat sink 216 to dissipate heat from at least the laser source.

In some embodiments, the laser device case 112 is configured to optically block light from the laser source 114. For example, the laser device case 112 may be formed from a material selected to block (e.g., absorb) light from the laser source 114, which may fully surround or encapsulate the laser source 114.

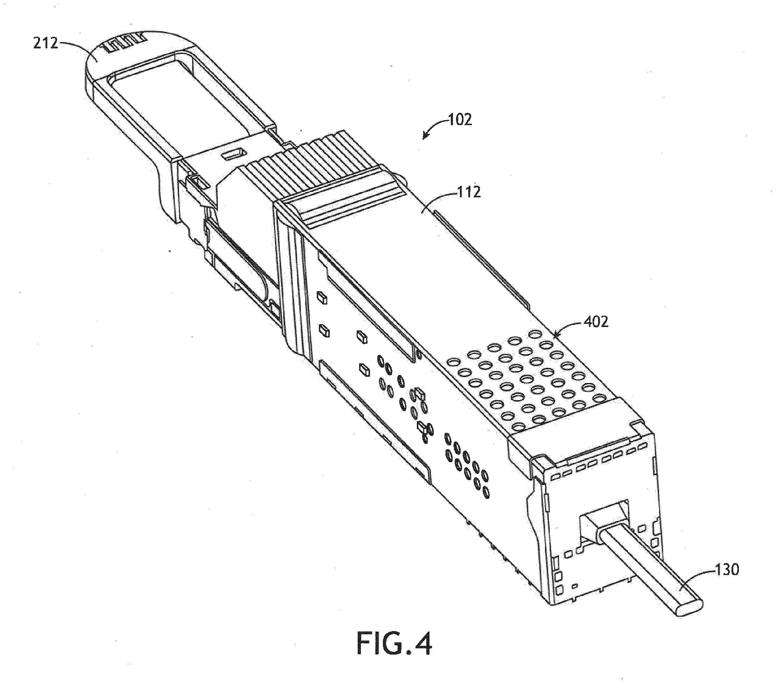

In some embodiments, the laser device case 112 is configured to block electromagnetic waves and thus prevent or suppress electromagnetic interference (EMI) from the laser device 102 and/or to the laser device 102. For example, the laser device case 112 may be formed from a metal, a mesh, a cage, or the like. FIG. 4 is a perspective view of the laser device 102 illustrating a cage 402 to suppress or mitigate EMI, in accordance with one or more embodiments of the present disclosure.

Similarly, the network device case 118 may have any shape or design suitable for containing the network device 104 and any other associated components (e.g., a power supply, or the like).

In some embodiments, the network device case 118 is shaped to fit within a rack (e.g., a network rack). For example, the network device case 118 may have, but is not required to have, a standardized size of 1U, 2U, 4U, or the like.

In some embodiments, network device case 118 includes features to facilitate thermal management of the network device 104 or other internal components. For example, the network device case 118 may include holes, vents, a heat sink, a fan, or the like.

In some embodiments, network device case 118 includes features to at least partially block light (e.g., from the laser source 114 after entering the network device case 118 through the EO port 110) such as, but not limited to baffles.

In some embodiments, the network device case 118 is configured to block electromagnetic waves and thus prevent or suppress electromagnetic interference (EMI) from the network device 104 and/or to the network device 104. For example, the network device case 118 may be formed from a metal, a mesh, a cage, or the like.

In some embodiments, the EO connector 108, the laser device case 112, the EO port 110, and/or the network device case 118 include features configured to facilitate coupling between the EO connector 108 and the EO port 110. Such features may provide any degree of coarse or fine alignment between the EO connector 108 and the EO port 110. Such features may further provide mechanical stability for the laser device case 112 when the EO connector 108 is coupled into the EO port 110. For instance, the weight of the laser device 102 may be fully supported when the EO connector 108 is coupled with the EO port 110.

As an illustration, the EO connector 108 depicted in FIGS. 2A-3B includes pins 218 to couple with corresponding holes (not shown) to provide an accurate and secure optical alignment. As another illustration, the laser device case 112 depicted in FIGS. 2A-3B includes a hollow rectangular protrusion 220 surrounding the optical connector 124 that may accept a housing 222 of the optical port 126, which may provide coarse alignment and/or mechanical stability.

In some embodiments, the electrical connector 120 and the electrical port 122 may at least partially engage prior to the optical connector 124 and the optical port 126. As a result, electrical connector 120 and the electrical port 122 may provide a coarse alignment between the EO connector 108 and the EO port 110 prior to connecting the optical connector 124 and the optical port 126. This is illustrated in FIGS. 3A-3B by the external portion 208 of the PCB 202 (e.g., a portion of the electrical connector 120) extending further from the laser device case 112 than any portion of the optical connector 124.

It is contemplated herein that simultaneous connections to the optical connector 124 and the electrical connector 120 may result in excessively tight alignment tolerances and potentially induce damage in the case of minor misalignments and/or minor fabrication errors. In some embodiments, at least one of the optical connector 124 or the electrical connector 120 is moveable within a range of distances (e.g., may float within this range of distances) to facilitate both optical and electrical connections in the case of minor misalignments and/or minor fabrication errors. For example, in the above example in which the electrical connector 120 provides a coarse alignment, the optical connector 124 may be moveable within a range of distances (e.g., may float) to accurately and securely align with the optical port 126.

In some embodiments, the EO connector 108, the laser device case 112, the EO port 110, and/or the network device case 118 include features configured to prevent emission of light from the laser device 102 when the laser device 102 is not coupled to the network device case 118 using the EO connector 108/EO port 110. In this way, the laser source 114 may exclusively provide light to the optical connector 124 when the EO connector 108 is coupled to the EO port 110.

For example, the EO connector 108 and/or the EO port 110 may be arranged such that an electrical connection to the laser source 114 (e.g., a connection providing electrical power) is only established once the optical connector 124 is engaged with the optical port 126 such that light from the optical connector 124 is optically shielded or blocked. As an illustration, the laser source 114 may receive power from the electrical connector 120 exclusively when the EO connector 108 is coupled to the EO port 110. For instance, electrical contacts 210 illustrated in FIGS. 2A-3B associated with power transfer to the laser source 114 may be located sufficiently close to the optical connector 124 such that an electrical connection to the laser source 114 (e.g., a connection providing electrical power) is only established once the optical connector 124 is engaged with the optical port 126 and/or the optical connector 124 is physically shielded. As another illustration, the hollow rectangular protrusion 220 extending beyond the optical connector 124 may optically block light from the laser source 114 once the housing 222 of the optical port is inside (e.g., as depicted in FIG. 3B).

As another illustration, the laser source 114 may be configured to exclusively provide light to the optical connector 124 when a signal (e.g., a control signal) is received through the electrical connector 120 (e.g., through a communication channel established through the electrical connector 120 and the electrical port 122). In this configuration, the signal may be generated by the network device 104 or another device within the network device case 118.

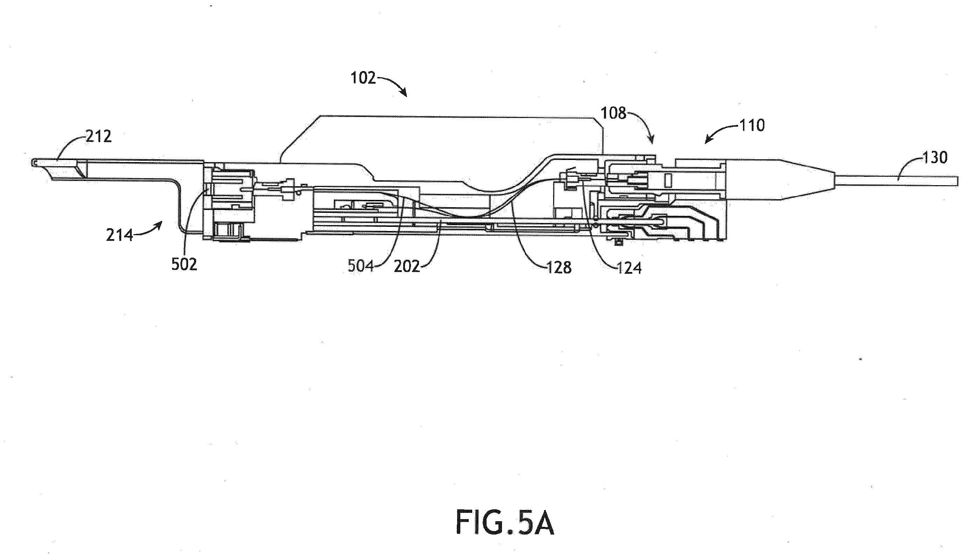

Referring now to FIGS. 5A-6B, in some embodiments, the laser device 102 includes one or more pass-through optical connections. Such pass-through optical connections may be suitable for, but are not limited to, providing an optical connection for the transfer of optical signals between the network device 104 and additional devices on a network.

As described previously herein, a network device 104 may analyze, route, and/or manipulate signals between various devices in a network. For example, the network device 104 may receive a signal from a device, analyze at least a portion of the signal (e.g., header information associated with a destination on the network, or the like) and route the signal to one or more devices accordingly. In practice, the network device 104 is physically connected to various devices on the network through ports on the network device case 118. These ports may include optical ports to couple with optical fibers in the case of communication using optical signals and/or electrical ports to couple either to electrical wiring (e.g., ethernet cable, or the like) or an optical transceiver 106. In either case, a total data rate supported by the network device 104 may be limited by a number of such data ports that may physically fit on the panel 116 of the network device case 118. Since laser devices 102 needed for powering the network device 104 also take up physical space on the panel 116, the laser devices 102 may also practically limit the total data rate supported by the network device 104.

However, it is contemplated herein that a bundle of optical fibers 130 connecting the EO port 110 to the network device 104 may simultaneously carry light from the laser source 114 to the network device 104 and also support unidirectional and/or bidirectional optical signals (e.g., optical signals containing modulated light represented data to be transferred) between the network device 104 and another device on a network.

In some embodiments, a laser device 102 includes an optical pass-through connection to simultaneously provide light from the laser source 114 to the network device 104 and provide a unidirectional and/or bidirectional optical connection between the network device 104 and additional devices on a network through the same EO connector 108 to a single EO port 110 on the network device case 118. In this way, laser devices 102 do not decrease a number of ports available for data communication between the network device 104 and additional devices on the network.

In some embodiments, the laser device 102 includes an optical port 502 and one or more optical fibers 504 connected between the optical port 502 and the optical connector 124 of the EO connector 108 to form an optical pass-through connection. In this way, an optical fiber (not shown) connected to another device on a network may be connected to the optical port 502 such that unidirectional and/or bidirectional optical signals may travel through any of the optical fibers 504 in the laser device case 112 and any of the optical fibers 130 in the network device case 118 to and/or from the network device 104.

The optical port 502 may have any design suitable for coupling with an additional optical fiber (not shown) that may be connected to an additional device on a network. For example, the optical port 502 may include or be compatible with a multiple-fiber push-on connector (MPO) design, a Lucent Corporation (LC) design, a Senko (SN) design, or any other suitable designs. Further, the optical port 502 may provide any number of channels (e.g., associated with any number of optical fibers) as described previously herein with respect to the optical connector 124.

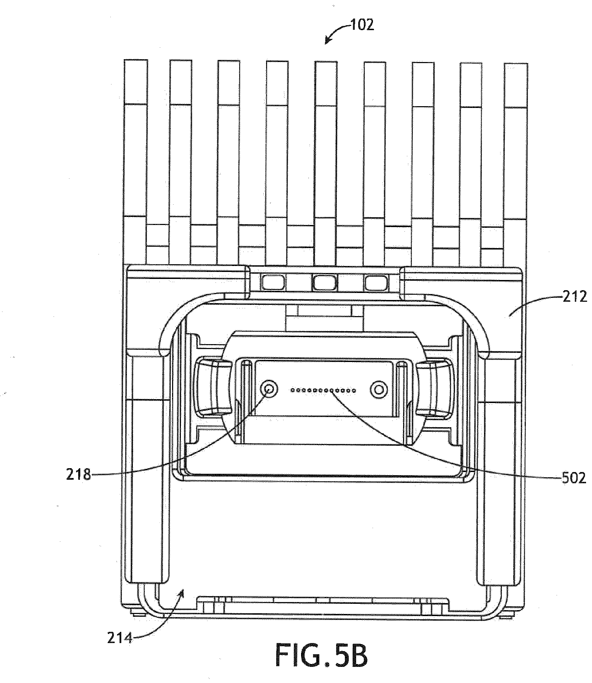

As an illustration, FIG. 5A is a cross-section view of a laser device case 112 including an optical port 502 with an MPO design, in accordance with one or more embodiments of the present disclosure. FIG. 5B is a side view of the laser device 102 in FIG. 5A depicting the optical port 502, in accordance with one or more embodiments of the present disclosure. FIG. 5A also depicts an EO port 110 coupled to the EO connector 108 and an optical fiber 130 (e.g., an optical fiber bundle), but does not show the network device case 118 for clarity.

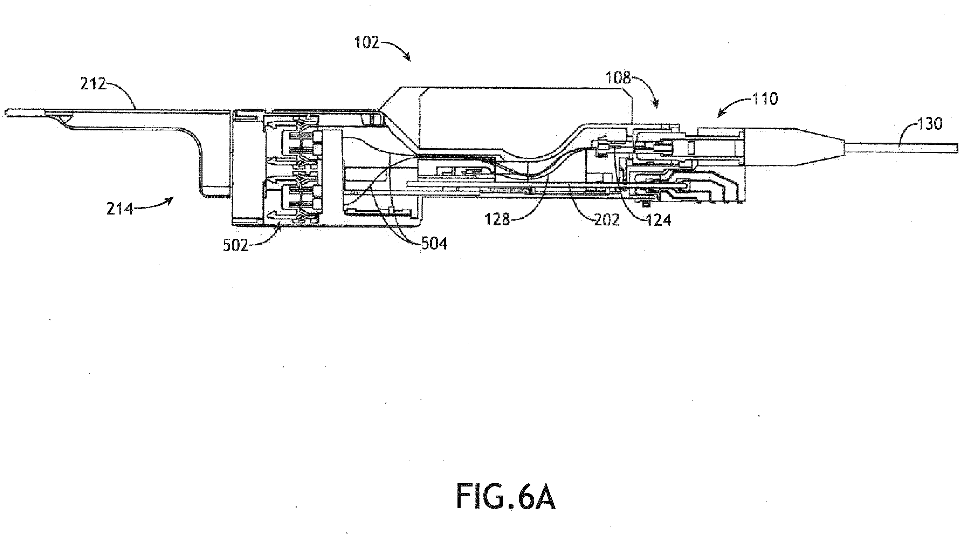

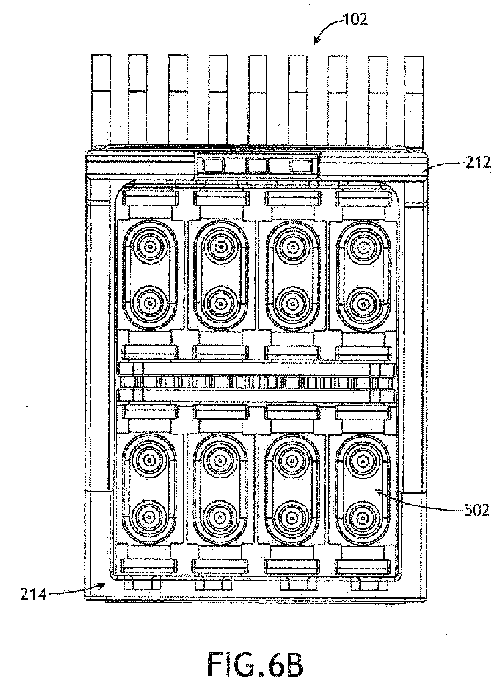

As another illustration, FIG. 6A is a cross-section view of a laser device case 112 including an optical port 502 with an SN design, in accordance with one or more embodiments of the present disclosure. FIG. 6B is a side view of the laser device 102 in FIG. 6A depicting the optical port 502, in accordance with one or more embodiments of the present disclosure. FIGS. 6A-6B also depicts an EO port 110 coupled to the EO connector 108 and an optical fiber 130 (e.g., an optical fiber bundle), but does not show the network device case 118 for clarity.

In general, the optical pass-through connection may include any number of optical fibers 504 to support any number of channels (e.g., pass-through channels). It is noted that the optical port 502 and the optical connector 124 may each support multiple fibers to support both the optical pass-through connections and connections to one or more laser devices 102 in the laser device case 112.

As an illustration, FIGS. 5A-5B depict the optical port 502 with a 1x12 MPO design to support an optical pass-through connection with up to 12 fibers and an optical connector 124 in the EO connector 108 with a 2x12 MPO design to support up to 24 fibers to support the optical pass-through connection as well as up to 12 connections to laser devices 102. As another illustration, FIGS. 6A-6B depict the optical port 502 with a (2×1)×8 SN design to support an optical pass-through connection with up to 16 fibers and an optical connector 124 in the EO connector 108 with a 2x12 MPO design to support up to 24 fibers to support the optical pass-through connection as well as up to 12 connections to laser devices 102.

Referring generally to FIGS. 5A-6B, the optical port 502 may generally be placed at any location on the laser device case 112. In some embodiments, the optical port 502 is located on a different side of the laser device case 112 as the EO connector 108. For example, as illustrated in FIGS. 5A-6B, the optical port 502 may be located on the side 214 of the laser device case 112 opposite the EO connector 108 (e.g., on a common side as the grip feature 212). In this way, connections to the optical port 502 do not interfere with other devices connected to the network device case 118 such as, but not limited to, laser devices 102.

Referring generally to FIGS. 1A-6B, it is to be understood that FIGS. 1A-6B and the associated descriptions are merely illustrative and should not be interpreted as limiting on the present disclosure. For example, depicted components such as, but not limited to, the laser device 102 or components therein, laser device case 112, the EO connector 108, the EO port 110, the network device case 118, or the network device 104 are not limited to the illustrated physical or functional layouts. Rather, any suitable physical or functional layout consistent with the spirit and scope of the present disclosure is contemplated herein.

It is believed that the present disclosure and many of its attendant advantages will be understood by the foregoing description, and it will be apparent that various changes may be made in the form, construction, and arrangement of the components without departing from the disclosed subject matter or without sacrificing all of its material advantages. The form described is merely explanatory, and it is the intention of the following claims to encompass and include such changes. Furthermore, it is to be understood that the invention is defined by the appended claims.

## Claims

1. A device comprising:
a case configured to secure a laser source; and
an electro-optical (EO) connector configured to connect with an EO port, the EO connector comprising:
an optical connector configured to connect with an optical port of the EO port and is configured to provide light from the laser source to the optical port; and
an electrical connector configured to connect with an electrical port of the EO port, wherein the laser source is configured to at least one of receive power through the electrical connector or facilitate establishing a communication channel through the electrical connector, wherein the optical connector and the electrical connector are on a first side of the case.

2. The device of claim 1, wherein the case encloses the laser source and is formed from one or more materials selected to block the light emitted by the laser source.

3. The device of claim 1, wherein the case comprises a heat sink configured to dissipate heat from at least the laser source.

4. The device of claim 1, wherein the electrical connector is configured to at least partially engage with the electrical port prior to the optical connector contacting the optical port, wherein the electrical connector provides a coarse alignment for the optical connector.

5. The device of claim 4, wherein the optical connector is moveable within a range of distances to connect with the optical port in response to the optical connector being aligned to the optical port within the range of distances.

6. The device of claim 1, wherein the laser source is configured to provide the light to the optical port in response to the EO connector being connected to the EO port.

7. The device of claim 6, wherein the laser source is configured to receive power through the electrical connector in response to the EO connector being connected to the EO port.

8. The device of claim 6, wherein the laser source is configured to provide the light to the optical port in response to a signal being present on the communication channel.

9. The device of claim 1, wherein the optical connector provides two or more optical connections.

10. The device of claim 1, wherein the electrical connector includes multiple electrical contacts for multiple electrical connections.

11. The device of claim 1, further comprising:
an optical port on a second side of the case;
one or more optical fibers connected between the optical port on the second side of the case and the optical connector on the first side of the case.

12. A system comprising:
a case;
a network device secured to the case, the network device comprising at least one of a switch or a hub; and
one or more electro-optical (EO) ports on the case, wherein each of the one or more EO ports is configured to connect with an EO connector, wherein each of the one or more EO ports comprises:
an optical port configured to connect with an optical connector of the EO connector, wherein the network device is configured to receive light from a laser source through the optical port; and
an electrical port configured to connect with an electrical connector of the EO connector, wherein the network device is configured to at least one of provide power through the electrical connector or facilitate establishing a communication channel through the electrical connector, wherein the optical port and the electrical port are on a first side of the case.

13. The system of claim 12, wherein the network device further comprises:
one or more optical transceivers located in the case, each of the one or more optical transceivers connected to the optical port of at least one of the one or more EO ports.

14. The system of claim 13, wherein the one or more optical transceivers are co-packaged with the network device.

15. A system comprising:
a network device secured to a first case, the network device comprising at least one of a switch or a hub; and
one or more devices connected to one or more electro-optical (EO) ports on the first case, wherein each of the one or devices comprises:
a laser source secured to a second case; and
an EO connector configured to connect with a corresponding EO port of the one or more EO ports, the EO connector comprising:
an optical connector configured to connect with an optical port of the corresponding EO port and configured to provide light from the laser source to the optical port; and
an electrical connector configured to connect with an electrical port of the corresponding EO port, wherein the laser source is configured to at least one of receive power through the electrical connector or facilitate establishing a communication channel through the electrical connector, wherein the optical connector and the electrical connector are on a first side of the second case.
